# EUROPÄISCHE PATENTSCHRIFT

(11) **EP 1 062 601 B1**
(45) Veröffentlichungstag und Bekanntmachung des Hinweises auf die Patenterteilung: **13.11.2002**
(21) Anmeldenummer: 99919088.7
(22) Anmeldetag: 16.03.1999
(51) Int. Cl.: G06F 17/30

(54) **SYSTEM UND VERFAHREN ZUR SUCHE AUF UNTEREINANDER VERNETZTEN RECHNERN MIT INFORMATIONSBESTÄNDEN MITTELS SOFTWAREAGENTEN**
SYSTEM AND METHOD FOR SEARCHING ON INTER-NETWORKED COMPUTERS WITH STOCKS OF INFORMATION USING SOFTWARE AGENTS
SYSTEME ET PROCEDE DE RECHERCHE SUR DES ORDINATEURS MIS EN RESEAU CONTENANT DES INFORMATIONS A L'AIDE D'AGENTS LOGICIELS

(30) Priorität: 16.03.1998 DE 19811352
(43) Veröffentlichungstag der Anmeldung: 27.12.2000
(73) Patentinhaber: SIEMENS AKTIENGESELLSCHAFT, 80333 München (DE)
(72) Erfinder: GEHMEYR, Andreas, D-85229 Markt Indersdorf (DE); SCHAPPERT, Albert, D-85244 Röhrmoos (DE); KRAMHÖFT, Kai, D-27568 Bremerhaven (DE); MÜLLER, Jürgen, D-67454 Hassloch (DE)
(86) Internationale Anmeldenummer: DE9900733
(87) Internationale Veröffentlichungsnummer: WO99048026

(56) Entgegenhaltungen:
- WO-A-96/23265
- US-A- 5 537 586

## Beschreibung

System und Verfahren zur Suche auf untereinander vernetzten Rechnern mit Informationsbeständen mittels Softwareagenten.

Durch die Einführung von allgemein verfügbaren Rechnernetzwerken, wie dem World Wide Web, in Verbindung mit benutzerfreundlichen Zugriffsprogrammen, sogenannten Browsern haben diese Netze bei einer steigenden Zahl von Benutzern an Beliebtheit gewonnen. Eine Vielzahl von Anwendungen in derartigen Netzwerken bezieht sich auf die Beschaffung und die Suche von Informationen. Wegen der steigenden Benutzeranzahl dieser Netzwerke und deren beschränkter Übertragungskapazität treten immer häufiger Engpässe bei der Datenübertragung auf, welche sich in stark erhöhten Antwortzeiten der Systeme auf Benutzereingaben äußern.

Damit nicht alle Benutzer online auf das Netz zugreifen müssen, hat sich die sog. Agententechnologie etabliert. Bei diesen Softwareagenten handelt es sich um autonome Softwareprogramme, welche nach Art eines Roboters Aufgaben für ihre Auftraggeber erledigen. Hierzu werden diese Softwareagenten im Netz über die Datenleitungen als Programme übertragen und laufen auf den entsprechenden Zielrechnern ab, um beispielsweise günstige Preise von angebotenen Produkten zu ermitteln, oder Buchungsaufträge durchzuführen, oder Informationen zu suchen. Softwareagerten sind vom Dokument WO 96/23265 bekannt.

Das der Erfindung zugrunde liegende Problem besteht darin, ein effizientes und zeitsparendes System und Verfahren zur Suche und Beschaffung von Informationen in einem Rechnernetzwerk mit heterogen verteilten Informationsquellen zur Verfügung zu stellen. Das System soll dabei insbesondere dem benutzerspezifischen Aspekt Rechnung tragen, das nicht relevante Informationen nicht berücksichtigt werden, so daß dem jeweiligen Anwender lediglich die gewünschte Information mit hoher Qualität zur Verfügung gestellt wird.

Diese Aufgabe wird gemäß den Merkmalen des Patentanspruches 1 für das Verfahren und gemäß den Merkmalen des Patentanspruches 7 für das System gelöst. Weiterbildungen der Erfindung ergeben sich aus den abhängigen Ansprüchen.

Das vorgeschlagene Verfahren hat den Vorteil, daß verschiedene Benutzeranforderungen gemeinsam abgearbeitet werden können, indem die Suchprofile miteinander verglichen und zu Gruppen zusammengefaßt werden. Die gruppenspezifischen Sucherfordernisse, werden dann gemeinsam erfüllt, nach Erfüllung wieder separiert und die Suchergebnisse werden an die einzelnen Anwender versandt. Hierdurch wird erreicht, daß keine Mehrfachzugriffe auf Datenbanken erfolgen müssen, damit wird die Datenübertragungsrate im Netz reduziert.

Vorteilhaft wird bei einer Weiterbildung des vorgeschlagenen Verfahrens eine Zuordnungsliste von Rechnern bereitgehalten, mit welcher der jeweilige Rechner und die ihm zugeordneten Rechnerinformationsbestände nach Art und Qualität verfügbar gehalten werden.

Besonders vorteilhaft werden unter Zuhilfenahme dieser Rechnerzuordnungsliste die gruppenspezifischen Suchprofile aufgeteilt, so daß für den jeweiligen Rechner ein spezifisches Suchprofil aus diesen Gruppensuchprofilen erstellt wird und ein jeweiliger Proxyagent mit Hilfe dieses Suchprofils die Suche auf den jeweiligen Rechnern im heterogenen Netzwerk durchführt. Diese Vorgehensweise hat den Vorteil, daß die Ressourcen des Netzwerks optimal genutzt werden, indem lediglich minimale Datenbestände in Form der Proxyagenten übertragen werden müssen und indem ebenfalls keine Doppelsuchen durchgeführt werden müssen. Auch hat diese Vorgehensweise den Vorteil, daß keine Fehlzugriffe erfolgen, da über die Zuordnungsliste von vorne herein klar ist, welche Informationen auf den jeweiligen Rechnern zur Verfügung stehen.

Vorteilhaft werden bei dem vorgeschlagenen Verfahren Suchprofile anhand von Listen mit Semantik tragenden Begriffen über spezielle Interface Agenten erstellt. Auf diese Weise wird erreicht, daß standardisierte Suchen erfolgen können wobei jedoch vorteilhaft ebenfalls die automatische Erzeugung generischer Gruppen nicht durch die Verwendung unterschiedlicher Begriffe mit gleicher Bedeutung verhindert wird.

Vorteilhaft wird nach Beschaffung der Information bei einer Weiterbildung des Verfahrens diese gemäß den semantischen Suchbegriffen aufgeteilt und die jeweiligen Aufteilungsergebnisse werden an die jeweiligen Proxyagenten gemäß deren Suchbegriffen/Suchprofile weiter verteilt und an den Auftraggeber durch den Profilagenten zurück geliefert.

Besonders vorteilhaft ist ein System zur Suche auf miteinander vernetzten Rechnern mit Informationsbeständen mittels Softwareagenten, in dem Eingabemittel zur Erzeugung von Suchprofilen mittels semantischer Suchprofilinformation vorhanden sind, welches weiterhin Agentenserver aufweist, die die Tätigkeit einer Gruppenerzeugung auf Basis des Vergleichs von Suchprofilinformationen durchführen und weiterhin die Möglichkeit besitzen, entsprechende Proxyagenten gemäß vorhandener Informationszuordnungslisten zu erzeugen, um sie zu unterschiedlichen Informationsbeständen auf verschiedenen Rechnern zu senden. Auf diese Weise werden die Aktivitäten des Systems auf einem Rechner gebündelt und die generische Gruppenbildung kann anhand eines Maximums von Systembenutzern durchgeführt werden. Besonders vorteilhaft sind bei einer Weiterbildung des vorgeschlagenen Systems Informationsagentenserver vorhanden, welche Zugriff auf definierte Informationsbestände, wie beispielsweise im World Wide Web, oder im Usenet haben. Auf diese Weise kann dem Agentenserver eine minimale Anzahl von Informationsagentenservern und der dort verfügbaren Information in einer Liste zur Verfügung gestellt werden, damit die Proxyagenten gemäß den jeweiligen Gruppensuchprofilen optimal aufgeteilt werden können.

Im Folgenden wird die Erfindung anhand von Beispielen und Figuren weiter erläutert. Dabei zeigt
- Figur 1: die schematische Darstellung einer Ausführungsform des erfindungsgemäßen Systems und
- Figur 2: Ablaufdiagramme eines Ausführungsbeispiels des erfindungsgemäßen Verfahrens.

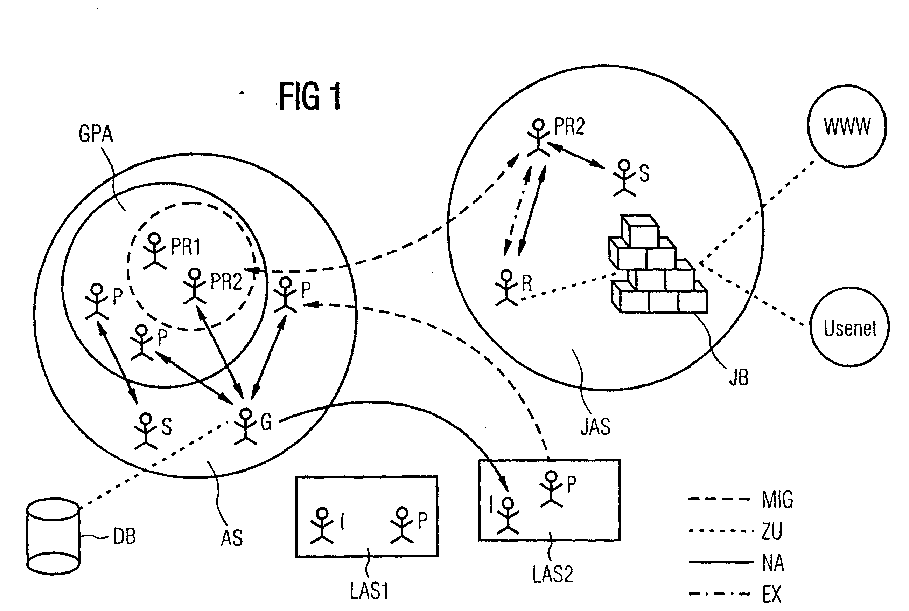

Wie Figur 1 zeigt besteht eine Ausführungsform des erfindungsgemäßen Systems aus Eingabekomponenten LAS1 und LAS2, Verarbeitungskomponenten AS und IAS sowie Datenquellen oder Senken WWW, Usenet und DB. An den Eingabekomponenten LAS1 und LAS2 werden beispielsweise von Benutzern mit Hilfe eines Browsers, der auch als lokaler Agentenserver ausgestaltet sein kann, Suchprofile erstellt. Zur Erstellung dieser Suchprofile werden dem Benutzer beispielsweise am lokalen Agentenserver LAS1 durch einen Informationsagenten I Listen mit Semantik tragenden Begriffen angeboten, aus welchen er einige auswählt, um sein aktuelles spezielles Informationsbedürfnis auszudrücken. Dieser Informationsagent ruft einen Profilagenten ins Leben, der wie bei LAS2 gezeigt zum Agentenserver AS migriert. Die lang gestrichelte Linie bedeutet in diesem Diagramm MIG wie Migration. Auf dem Agentenserver sind weitere Profilagenten vorhanden. Mittels eines Vergleichsprozesses werden die Suchprofile der einzelnen Profilagenten miteinander verglichen, indem beispielsweise die Anzahl der gleichen semantischen Begriffe gezählt wird und festgestellt wird, wie viele Suchbegriffe innerhalb der einzelnen Profile übereinstimmen. Es sind aber auch andere Vergleichsprozesse für die Suchprofile denkbar. Anhand dieses Vergleichsergebnisses kann festgestellt werden, ob verschiedene Profilagenten zu einer Gruppe zusammengefaßt werden können, wie dies beispielsweise mit GPA angedeutet ist. Hier sind z. B. auch Serveragenten S vorgesehen, die auf die unternehmenseigene Datenbank DB Zugriff haben. Mit der gepunkteten Linie in Figur 1 ist der Zugriff ZU dargestellt. Ein Serveragent kann beispielsweise eine Liste von Ressourcen innerhalb des verteilten Netzwerkes bereitstellen, in welcher die Information spartenspezifisch den Rechnern und ihren Adressen entsprechend im Netzwerk zugeordnet ist. Der Serveragent S kann mit den Profilagenten P Nachrichten austauschen, was durch die durchgezogene Linie NA dargestellt ist. Das Informationsbedürfnis einer Profilagentengruppe GPA kann in Form eines Gruppensuchprofiles dargestellt sein, das dadurch erzeugt wird, daß die Suchprofile einzelner Profilagenten mittels einer Mengenoperation verarbeitet werden. Dieses Gruppensuchprofil kann in Kenntnis der auf einem Informationsagentenserver IAS vorhandenen Informationen auf einzelne Informationsagentenserver aufgeteilt werden, so daß sich Proxyagenten PR1 und PR2 erzeugen lassen, welche die unterschiedlichen Informationsagentenserver aufsuchen und die dort vorhandenen Informationen gemäß dem Gruppensuchprofil abfragen. Die Proxyagenten können beispielsweise auch durch einen Gruppenagenten G erzeugt werden, der das gesamte Gruppensuchprofil aufweist. Wie Figur 1 zeigt migriert beispielsweise der Proxyagent PR2 auf den Informationsagentenserver IAS. Dort hält der Serveragent S gemäß der vorgegebenen Wissenssparte des Informationsagentenservers Informationseinheiten IB bereit, welche semantischen Begriffen zugeordnet werden können. Der Proxyagent PR2 tauscht mit dem Ressourcenagenten R Daten aus, welcher wiederum auf die Informationsblöcke IB zugreifen kann. Dabei werden dem Proxyagenten PR2 die auf dem Informationsagentenserver IAS vorhandenen Informationsblöcke zur Verfügung gestellt, die zu seinem Suchprofil passen. Der Datenzugriff ist in Figur 1 mit ZU und gestrichelten Punkten dargestellt. Der Vergleich von Dokumenteninhalten und Suchprofilen zur spartenspezifischen Informatinsbeschaffung aus den Informationsquellen kann beispielsweise dadurch geschehen, daß lediglich semantisch bedeutende Worte des Dokuments unterschieden werden und jeweils einem Wort eine Vektordimension eines n-dimensionalen Vektorraumes zugewiesen wird. Wobei die Anzahl der Worte die Komponentenwerte auf der jeweiligen Achse angeben. Auf diese Weise wird für jedes Dokument ein Punkt im n-dimensionalen Vektorraum erzeugt. Die selbe Vorgehensweise läßt sich auch auf ein jeweiliges Suchprofil anwenden, so daß die Ähnlichkeit zwischen Suchprofilen und dem jeweiligen Dokument dadurch bestimmt werden kann, daß das Suchprofil auf den n-dimensionalen Vektorraum des Dokumentes abgebildet wird. So daß sich auch für das Suchprofil ein Punkt in diesem Vektorraum ergibt, woraus sich der Winkel zwischen diesen beiden Punkten des Dokumentes und des Suchprofiles und dem Ursprung des Vektorraumes bestimmen läßt, welcher als Maß für die Übereinstimmung des Suchprofiles mit dem Dokument dienen kann. Auf diese Weise kann dem Suchprofil relevante Information mittels eines Schwellwertes für diese sogenannte Kosinusmaß, was als Kosinus des Winkels zwischen diesen beiden Geraden definiert ist, zugeordnet werden. Nachdem der Proxyagent seine Informationen erhalten hat, kehrt er zum Agentenserver zurück und gibt seine beschaffte Information an den Gruppenagenten G weiter, der diese wiederum dem Interface Agenten I des jeweiligen lokalen Agentenservers LAS1 und LAS2 zur Verfügung stellt, so daß der jeweilige Bediener die von ihm angeforderten Informationen erhält. Dasselbe tut der Gruppenagent für die weiteren Proxyagenten, die zu anderen Informationsagentenservern versandt wurden, nach deren Rückkehr. Weiterhin sind Informationsquellen WWW und Usenet dargestellt, aus denen der Serveragent gemäß der Informationssparte des Informationsagentenservers Informationsblöcke aufbaut.

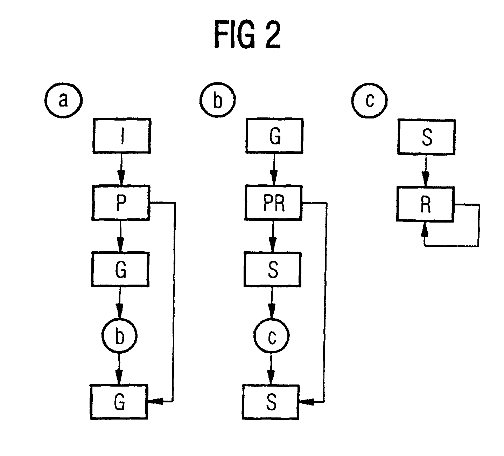

Figur 2 zeigt verschiedene Ablaufdiagramme a, b und c einer Ausführungsform eines beschriebenen Verfahrens. Durch die Erfindung wird die Informationsbeschaffung aus verteilten und heterogenen Informationsquellen verbessert. Insbesondere werden dadurch der Zeitaufwand und die Kosten für die Beschaffung erheblich reduziert, während die Qualität der beschafften Informationen verbessert wird, indem nicht relevante Informationen auch nicht berücksichtigt werden. Nutzer des Systems werden automatisch nach ähnlichen Interessensgebieten gruppiert und Informationen innerhalb dieser Gruppen können ausgetauscht werden. Insbesondere werden durch das beschriebene Verfahren und das beschriebene System die Probleme auf Basis einer generischen Agentenarchitektur gelöst. Dabei werden hauptsächlich Informationsagentenserver und Agentenserver unterschieden, welche mit IAS und AS bezeichnet sind. Die Informationsagentenserver IAS sind für die Bereitstellung der Informationen verantwortlich. Ein Serveragent S verwaltet die Informationsressourcen R, entweder selber oder hat Zugriff darauf. In voller Ausprägung bieten sie eine interessenspezifische vorverarbeitete Menge von Informationen auf eine Anfrage eines Proxyagenten PR an.

Der Proxyagent als Stellvertreter eines Gruppenagenten G wird vom Agentenserver AS zu den verschiedenen Informationsagentenservern oder anderen Servern geschickt. Er repräsentiert das Interesse von einer Gruppe von Nutzern, bestehend aus Profilagenten P. Diese Gruppe von Nutzern wird automatisch auf den Agentenserver gebildet und repräsentiert durch den Gruppenagenten. Kriterium für die Bildung von Gruppen ist eine hinreichend hohe Ähnlichkeit des Informationsinteresses von verschiedenen Profilagenten. Der Ablauf läßt sich wie folgt darstellen:
a) ein Nutzer definiert sein Informationsinteresse in Form einer gewichteten Liste von Semantik tragenden Begriffen und anderen Kriterien mit Hilfe des Interface Agenten I. Diese Daten werden einem Profilagenten P übergeben. Der Profilagent enthält beispielsweise noch weitere Parameter, wie maximale Lebenszeit, mögliche Ressourcen für die Nutzung anderer Dienste, Adressen für die Informationssuche usw.. Er wandert zu einem spezifischen Agentenserver AS. Dort wird das Interessenprofil des Profilagenten mit vorhandenen Gruppen verglichen. Der Profilagent tritt der Gruppe mit dem ähnlichen Profil bei. Dies kann beispielsweise durch einen Vergleich verschiedener Suchprofile unter Bildung eines Schwellenwertes zur Diskriminierung entschieden werden. Falls der Schwellenwert nicht zur Zuordnung des Profilagenten P zu einer Gruppe ausreicht, so besteht weiterhin die Möglichkeit, daß der Profilagent eine eigene Gruppe bildet oder zu einem evtl. vorhandenen anderen Agentenserver migriert und dort erneut den Vergleich seiner Suchprofils mit den dort vorhandenen Suchprofilen durchführt. Nachdem dieser Vorgang abgeschlossen ist, erfolgt Teil b) des Ablaufdiagrammes. Dort erzeugt eine Gruppe G verschiedene Proxyagenten PR, die zu den Informationsagentenservern AS verschickt werden. Insbesondere steht dabei auf den Agentenservern eine bewertete Liste der bekannten Informationsagentenserver zur Verfügung. Beispielsweise sind in dieser bewerteten Liste unterschiedliche Informatiossparten aufgeführt und deren Zuordnung zu unterschiedlichen Rechnern mit ihren Adressen. Während die Proxyagenten PR einer Gruppe GPA aktiv sind, ruhen die Profilagenten P dieser Gruppe. Die Proxyagenten PR enthalten das Interessenprofil der Gruppe und weitere Parameter, wie Lebensdauer, Ressourcen für die Nutzung anderer Dienste usw.. Proxyagenten können nicht Mitglied einer Gruppe werden. Nachdem alle Proxyagenten zurückgekehrt sind oder nicht mehr zurückkehren werden, weil ihre Lebensdauer abgelaufen ist, werden die erzielen Ergebnisse auf alle Mitglieder der Gruppe verteilt. Danach sind die Profilagenten wieder frei und können zurückkehren oder zu weiteren Agentenservern migrieren. Nachdem dieser Prozeß abgeschlossen ist, erfolgt Teilprozeß c). Dort nutzen die Proxyagenten PR die Dienste des Informationsagentenservers IAS, die ihnen von den dort vorhandenen Serviceagenten S und Ressourcenagenten R bereitgestellt werden. Die Basisfunktionalität der Informationsagentenserver IAS wird beispielsweise durch ein System bereitgestellt, daß zu gegebenem Interessenprofil aus den Informationsreserven World Wide Web (WWW), News oder Mail die relevanten Informationen herausfiltert und dem Proxyagenten übergibt. Hierzu kann die Ähnlichkeit von Suchprofilen mit in den jeweiligen Informationsquellen vorhandenen Dokumenten, wie zuvor beschrieben, anhand des n-dimensionalen Vektorraumes und des gebildeten Kosinusmaßes festgestellt werden. Der jeweilige Proxyagent kann einen Diskriminator als Schwellenwert enthalten, der festlegt, ab welcher Ähnlichkeit mit seinem Suchprofil er von den Ressourcenagenten R und Serveragenten S bereitgestellte Dokumente als Suchergebnis übernimmt.

Die vorteilhaften Aspekte des Systems betreffen vor allen Dingen die Gruppenbildung, die Steuerung der Migration der einzelnen Agenten und die Informationsbearbeitung auf der Anbieterseite. Die Bildung von Gruppen, bestehend aus den Profilagenten der Nutzer des Systems beruht auf der Bestimmung der Interessen der Profilagenten und deren Vergleich mit dem Profil der Gruppe. Ergebnis des Vergleichs ist ein numerischer Wert. Liegt dieser beispielsweise über einem Schwellenwert, so kann der Profilagent Mitglied der Gruppe werden. Das Gruppenprofil wird durch ein neues Mitglied angepaßt, wozu z. B. eine Mengenoperation wie die Mittelung, Vereinigung oder der Durchschnitt auf die einzelnen Suchprofile der Gruppe angewandt wird. Die erforderliche Anpassung erfolgt automatisch und wird mit allen Mitgliedern koordiniert. Basierend auf dem Gruppenprofil werden Proxyagenten für die Gruppe erzeugt. Diese Erzeugung wird von den Gruppenmitgliedern und der Verfügbarkeit geeigneter Informationsquellen beispielsweise über eine Zuordnungsliste gesteuert.

Die Verfügbarkeit geeigneter Informationsquellen wird vom Agentenserver entschieden. Dieser enthält ein bewertetes Modell einer Informationsquelle, wie beispielsweise dem World Wide Web WWW und schickt die Profilagenten in Abhängigkeit von ihren Suchprofilen zu geeigneten Informationsagentenservern, deren Adressen in diesem Modell abgelegt sind. Ein solches Modell kann beispielsweise durch bekannte Suchmaschinen initial generiert werden. Es wird darüber hinaus durch diese und durch Informationen von zurückkehrenden Proxyagenten erweitert.

Auf den jeweiligen Informationsagentenservern werden Informationsbedürfnisse der Proxyagenten gemäß deren Suchprofilen erfüllt. Die Vorbearbeitung der einzelnen Informationen erfolgt auf diesen Servern, so daß keine unnötigen Transporte anfallen und der Nutzer mit qualitativ hochwertigen Informationen versorgt wird. Die Proxyagenten können sowohl die Informationen selbst, Verweise darauf, oder sonstige Daten über die Informationen als Suchergebnis mitnehmen. Die technische Basis für die verschiedenen Vergleiche im Ablauf des Systems kann das Vektorraummodell aus dem Bereich des Information Retrieval bilden, das zuvor bereits beschrieben wurde. Darüber hinaus kommen auch andere Vergleichsoperatoren in Frage. Einziges Kriterium an diese ist die Berechnung eines Relvanzoder Ähnlichkeitswertes eins Profils mit dem in Frage kommenden Informationsobjekt.

Die Vorteile des beschriebenen Ansatzes liegen in der:
- Reduktion der Netzbelastung bei der Informationsbeschaffung durch Nutzung von Gruppenvertretern.
- Qualitätsverbesserung der beschafften Information durch Vorverarbeitung auf der Anbieterseite.
- Kostenreduktion durch Zusammenfassung von verschiedenen Informationsanfragen einer Gruppe.
- Verminderung der Belastung von lokalen Ressourcen durch Vermeidung von Informationsmüll.
- Flexibilisierung des Systems durch Nutzen von Agententechnologien für das dynamische Umfeld.
- Identifikation von Nutzern mit gleichen oder ähnlichen Interessen.

Der besondere Gedanke des vorgestellten Systems und Verfahrens liegt in der Kombination von Techniken des Information Retrieval und der mobilen Agentensysteme. Insbesondere die Gruppenbildung und die Informationsvorverarbeitung auf den Informationsagentenservern wurde bisher im Stand der Technik nicht beschrieben. Darüber hinaus enthält der Vorschlag eine neue Architektur für die Lösung der verteilten Informationsbeschaffung.

## Patentansprüche

1. Verfahren zur Bearbeitung mindestens einer ersten semantischen Suchprofilinformation und einer zweiten semantischen Suchprofilinformation durch einen Softwareagenten, welcher Softwareagent einen ersten Softwaretyp in Form eines Profilagenten umfaßt, welcher Profilagent mit variabler semantischer Suchprofilinformation ausstattbar ist, mit folgenden Merkmalen:
a) die erste semantische Suchprofilinformation und die zweite semantische Suchprofilinformation werden miteinander verglichen und es wird ein Profilähnlichkeitsmaß bestimmt;
b) das Profilähnlichkeitsmaß wird bezüglich eines Ähnlichkeitsschwellenwertes bewertet und falls die Bewertung ergibt, daß die Ähnlichkeit groß genug ist, werden die beiden Suchprofilinformationen in einer Suchgruppe (GPA) zusammengefaßt, falls dagegen die Ähnlichkeit zu klein ist, wird für jede Suchprofilinformation eine eigene Suchgruppe gebildet.

2. Verfahren nach Anspruch 1,
bei dem eine Suchgruppe mit Suchgruppenprofilinformation ausgestattet wird derart, daß jede Suchprofilinformation der Suchgruppe durch eine Mengenoperation zu der Suchgruppenprofilinformation verarbeitet wird.

3. Verfahren nach Anspruch 2,
bei dem zur Erstellung der variablen semantischen Suchprofilinformation ein Agententyp in Form eines Interface Agenten (I) verwendet wird, der eine Liste semantiktragender Begriffe zur Bildung der variablen semantischen Suchprofilinformation anbietet und die variable semantische Suchprofilinformation an den Profilagenten (P) weitergibt.

4. Verfahren nach einem der Ansprüche 2 bis 3,
bei dem unter Verwendung der Suchgruppen Profilinformation gesucht wird, indem ein Gruppenagent (G) gebildet wird, der mit Suchgruppenprofilinformation ausgestattet ist.

5. Verfahren nach Anspruch 4,
a) bei dem eine Rechnerliste mit in mehreren Rechnern von miteinander vernetzten Rechnern verfügbarer Suchinformation bereitgehalten wird, bei dem anhand der Gruppensuchprofilinformation eine Aufteilung gemäß der Rechnerliste vorgenommen wird, durch Vergleich der Liste und der Zuordnung der Suchinformation zu den Rechnern, so daß die rechnerrelevanten Teilsuchprofilinformationen aus der Gruppensuchprofilinformation gebildet werden;
b) und bei dem Proxyagenten (PR) gebildet werden, welche mit der jeweiligen Teilsuchprofilinformation ausgestattet werden und welche eine Information auf dem jeweils nach der Liste festgelegten Rechner anhand der festgelegten Teilsuchprofilinformation suchen, indem diese zu dem jeweiligen Rechner versandt werden.

6. Verfahren nach Anspruch 5,
bei dem von den Proxyagenten (PR) gefundene Informationen den Profilagenten (P) übermittelt werden, indem sie stückweise gemäß den Suchprofilen des jeweiligen Profilagenten aufgeteilt werden, wobei die Zuordnung gemäß den semantiktragenden Begriffen in den Suchprofilen erfolgt.

7. Vorrichtung zur Bearbeitung mindestens einer ersten semantischen Suchprofilinformation und einer zweiten semantischen Suchprofilinformation durch einen Softwareagenten, welcher Softwareagent einen ersten Softwaretyp in Form eines Profilagenten umfaßt, welcher Profilagent mit variabler semantischer Suchprofilinformation ausstattbar ist, mit folgenden Merkmalen:
a) es sind Eingabekomponenten (LAS1,LAS2) zur Erzeugung von Profilagenten (P) vorhanden;
b) es ist mindestens ein Agentenserver (AS) vorhanden, der einen Suchprofilinformationsvergleich von der ersten semantischen Suchprofilinformation und der zweiten semantischen Suchprofilinformation durchführt, der ein Profilähnlichkeitsmaß ermittelt, das Profilähnlichkeitsmaß bezüglich eines Ähnlichkeitsschwellenwertes bewertet und festlegt, daß, falls die Bewertung ergibt, daß die Ähnlichkeit groß genug ist, die beiden Suchprofilinformationen in einer Suchgruppe (GPA) zusammenfaßt werden, und daß, falls dagegen die Ähnlichkeit zu klein ist, für jede Suchprofilinformation eine eigene Suchgruppe gebildet wird;
c) es ist mindestens ein Informationsagentenserver (IAS) zur Bereitstellung von Informationen vorhanden.

8. Vorrichtung nach Anspruch 7,
bei der auf dem Agentenserver (AS) eine Liste von weiteren Informationsagentenservern (IAS) bereitgehalten wird und bei der in der Liste verfügbar gehalten wird, welcher Informationsagentenserver (IAS) auf welche Informationen Zugriff hat.

9. Vorrichtung nach Anspruch 8,
bei dem Mittel vorhanden sind zur Aufteilung einer variablen semantischen Suchprofilinformation in eine Mehrzahl von Teilsuchprofilinformationen gemäß der Liste spezifischer Informationsagentenserver (IAS) und bei dem Mittel vorhanden sind zur Erzeugung von Proxyagenten(PR) mit jeweils einer Teilsuchprofilinformation und zum Versand dieser Proxyagenten (PR) an die nach der Liste spezifizierten Informationsagentenserver (IAS).

10. Vorrichtung nach einem der Ansprüche 7 bis 9,
bei dem die Informationsagentenserver (IAS) mit einem allgemein verfügbaren Computernetz verbunden sind.

## Claims

1. Method for handling at least one first item of semantic search profile information and a second item of semantic search profile information using a software agent, which software agent comprises a first software type in the form of a profile agent, which profile agent can be equipped with variable semantic search profile information, having the following features:
a) the first item of semantic search profile information and the second item of semantic search profile information are compared with one another and a degree of profile similarity is determined;
b) the degree of profile similarity is assessed in terms of a similarity threshold value, and if the assessment reveals that the similarity is great enough, the two items of search profile information are combined in a search group (GPA), or if, by contrast, the similarity is too slight, a separate search group is formed for each item of search profile information.

2. Method according to Claim 1,
in which a search group is equipped with search group profile information such that each item of search profile information in the search group is processed using a set operation to form the search group profile information.

3. Method according to Claim 2,
in which the variable semantic search profile information is created by using an agent type in the form of an interface agent (I) which provides a list of semantic-bearing terms for forming the variable semantic search profile information and forwards the variable semantic search profile information to the profile agent (P).

4. Method according to one of Claims 2 to 3,
in which the search groups are used to search for profile information by forming a group agent (G) which is equipped with search group profile information.

5. Method according to Claim 4,
a) in which a computer list containing search information available on a plurality of computers among interconnected computers is maintained, where the group search profile information is used to make a split on the basis of the computer list by comparing the list and the association between the search information and the computers, so that the computer-related search profile information sections are formed from the group search profile information;
b) and in which proxy agents (PR) are formed which are equipped with the respective search profile information section and which search for an item of information on the respective computer stipulated according to the list using the stipulated search profile information section by sending the latter to the respective computer.

6. Method according to Claim 5,
in which information found by the proxy agents (PR) is transmitted to the profile agents (P) by splitting it piece by piece on the basis of the search profiles of the respective profile agent, the association being made on the basis of the semantic-bearing terms in the search profiles.

7. Apparatus for handling at least one first item of semantic search profile information and a second item of semantic search profile information using a software agent, which software agent comprises a first software type in the form of a profile agent, which profile agent can be equipped with variable semantic search profile information, having the following features:
a) input components (LAS1, LAS2) for producing profile agents (P) are provided;
b) at least one agent server (AS) is provided which performs a search profile information comparison of the first item of semantic search profile information and of the second item of semantic search profile information, ascertains a degree of profile similarity, assesses the degree of profile similarity in terms of a similarity threshold value, and stipulates that if the assessment reveals that the similarity is great enough, the two items of search profile information are combined in a search group (GPA), and that if, by contrast, the similarity is too slight, a separate search group is formed for each item of search profile information;
c) at least one information agent server (IAS) for providing information is provided.

8. Apparatus according to Claim 7,
in which the agent server (AS) maintains a list of further information agent servers (IAS), and in which the list shows which information agent server (IAS) has access to which information.

9. Apparatus according to Claim 8,
in which means are provided for splitting an item of variable semantic search profile information into a plurality of search profile information sections on the basis of the list of specific information agent servers (IAS), and in which means are provided for producing proxy agents (PR) with a respective search profile information section and for sending these proxy agents (PR) to the information agent servers (IAS) specified according to the list.

10. Apparatus according to one of Claims 7 to 9,
in which the information agent servers (IAS) are connected to a generally available computer network.

## Revendications

1. Procédé pour le traitement d'au moins une première information sémantique de profil de recherche et d'une deuxième information sémantique de profil de recherche par un agent logiciel, lequel agent logiciel comprend un premier type logiciel sous forme d'un agent de profil, lequel agent de profil peut être muni d'une information sémantique variable de profil de recherche, ayant les caractéristiques suivantes :
a) la première information sémantique de profil de recherche et la deuxième information sémantique de profil de recherche sont comparées entre elles et une mesure de similitude de profil est déterminée ;
b) la mesure de similitude de profil est évaluée par rapport à une valeur de seuil de similitude et, au cas où il ressort de l'évaluation que la similitude est suffisamment grande, les deux informations de profil de recherche sont regroupées dans un groupe de recherche (GPA), au cas où, au contraire, la similitude est trop petite, un propre groupe de recherche est formé pour chaque information de profil de recherche.

2. Procédé selon la revendication 1,
dans lequel un groupe de recherche est muni d'une information de profil de groupe de recherche, de telle manière que chaque information de profil de recherche du groupe de recherche est traitée par une opération d'ensemble en information de profil du groupe de recherche.

3. Procédé selon la revendication 2,
dans lequel un type d'agent est utilisé sous forme d'un agent d'interface (I) pour la création de l'information sémantique variable de profil de recherche, cet agent d'interface proposant une liste de termes porteurs de sémantique pour la formation de l'information sémantique variable de profil de recherche et transmettant l'information sémantique variable de profil de recherche à l'agent de profil (P).

4. Procédé selon l'une des revendications 2 à 3,
dans lequel une information de profil est recherchée en utilisant les groupes de recherche du fait qu'un agent de groupe (G) est formé, qui est muni de l'information de profil d'un groupe de recherche.

5. Procédé selon la revendication 4,
a) dans lequel une liste d'ordinateur est tenue à disposition avec une information de recherche disponible dans plusieurs ordinateurs mis en réseau, dans lequel une division est effectuée suivant la liste d'ordinateur à l'aide de l'information de profil de recherche de groupe, par comparaison de la liste avec l'affectation de l'information de recherche aux ordinateurs, de telle sorte que les informations de profil de recherche partielle importantes pour l'ordinateur sont formées par l'information de profil de recherche du groupe ;
b) et dans lequel des agents proxy (PR) sont formés, lesquels sont munis de l'information respective de profil de recherche partielle et lesquels recherchent une information sur l'ordinateur déterminé respectivement suivant la liste à l'aide de l'information de profil de recherche partielle déterminée, du fait que celle-ci est envoyée à l'ordinateur respectif.

6. Procédé selon la revendication 5,
dans lequel les informations trouvées par les agents proxy (PR) sont transmises aux agents de profil (P), du fait qu'elles sont divisées individuellement suivant les profils de recherche de l'agent de profil respectif, l'affectation selon les termes porteurs de sémantique étant effectuée dans les profils de recherche.

7. Système de traitement d'au moins une première information sémantique de profil de recherche et d'une deuxième information sémantique de profil de recherche par un agent de profil, lequel agent de profil comprend un premier type logiciel sous forme d'un agent de profil, lequel agent de profil peut être muni d'une information sémantique variable de profil de recherche, ayant les caractéristiques suivantes :
a) des composantes de saisie (LAS1, LAS2) sont présentes pour la création des agents de profil (P) ;
b) au moins un serveur d'agents (AS) est présent, lequel réalise une comparaison d'informations de profil de recherche de la première information sémantique de profil de recherche avec la deuxième information sémantique de profil de recherche, lequel détermine une mesure de similitude de profil, évalue la mesure de similitude de profil par rapport à une valeur de seuil de similitude et, au cas où il résulte de l'évaluation que la similitude est suffisamment grande, détermine que les deux informations de profil de recherche sont regroupées dans un groupe de recherche (GPA) et que, au cas où la similitude est par contre trop petite, qu'un propre groupe de recherche est formé pour chaque information de profil de recherche ;
c) au moins un serveur d'agents d'information (IAS) est présent pour la mise à disposition d'informations.

8. Système selon la revendication 7,
dans lequel une liste de serveurs d'agents d'information supplémentaires (IAS) est tenue à disposition sur le serveur d'agents (AS) et dans lequel il est maintenu à disposition dans la liste quel serveur d'agents d'information (IAS) a accès à quelles informations.

9. Système selon la revendication 8,
dans lequel des moyens sont présents pour la division d'une information sémantique variable de profil de recherche en une multitude d'informations de profil de recherche partielle selon la liste de serveurs d'agents d'information (IAS) spécifiques et dans lequel des moyens sont présents pour la création d'agents proxy (PR) avec respectivement une information de profil de recherche partielle et pour l'envoi de ces agents proxy (PR) aux serveurs d'agents d'information (IAS) spécifiés selon la liste.

10. Système selon l'une des revendications 7 à 9,
dans lequel les serveurs d'agents d'information (IAS) sont connectés à un réseau d'ordinateurs disponible de manière générale.
